# EUROPÄISCHE PATENTSCHRIFT

(11) **EP 2 357 398 B1**
(45) Veröffentlichungstag und Bekanntmachung des Hinweises auf die Patenterteilung: **01.03.2017**
(21) Anmeldenummer: 11163138.8
(22) Anmeldetag: 20.04.2011
(51) Int. Cl.: F21S 8/10, F21S 8/12, F21V 29/00, F21V 14/06, F21V 5/00, F21V 5/08, F21V 11/16

(54) **Lichtmodul für eine Beleuchtungseinrichtung eines Kraftfahrzeugs**
Light module for a lighting device of a motor vehicle
Module d'éclairage pour un dispositif d'éclairage d'un véhicule automobile

(30) Priorität: 09.06.2010 DE 102010023177
(43) Veröffentlichungstag der Anmeldung: 17.08.2011
(60) Teilanmeldung: 13157913.8
(73) Patentinhaber: Automotive Lighting Reutlingen GmbH, 72762 Reutlingen (DE)
(72) Erfinder: Hoßfeld, Wolfgang, 72810 Gomaringen (DE); Buchberger, Christian, 72770 Reutlingen (DE)
(74) Vertreter: DREISS Patentanwälte PartG mbB

(56) Entgegenhaltungen:
- EP-A1- 2 034 235
- EP-A2- 0 230 620
- EP-A2- 0 677 695
- DE-A1-102004 012 519
- DE-A1-102006 041 428
- DE-A1-102008 036 192
- DE-U1-202007 018 181
- FR-A1- 2 860 280
- JP-A- 2008 103 300
- US-A1- 2001 019 486
- US-A1- 2005 276 053
- US-A1- 2006 139 918

## Beschreibung

Die vorliegende Erfindung betrifft ein Lichtmodul für eine Beleuchtungseinrichtung eines Kraftfahrzeugs mit mindestens einer Halbleiterlichtquelle zum Aussenden von Licht, mindestens einer Primäroptik zum Bündeln des ausgesandten Lichts, einer Blende, die sich in einer eine optische Achse des Lichtmoduls umfassenden, im Wesentlichen horizontalen Ebene erstreckt, zum Abschatten eines Teils des gebündelten Lichts und mit einer Sekundäroptik zum Abbilden eines an der Blende vorbei gelangten Teils des Lichts sowie eines an der Blende gespiegelten Teils des Lichts zur Erzeugung einer gewünschten Lichtverteilung auf der Fahrbahn vor dem Kraftfahrzeug. Außerdem betrifft die Erfindung eine Beleuchtungseinrichtung für ein Kraftfahrzeug mit mindestens einem solchen Lichtmodul zur Erzeugung einer Lichtverteilung auf einer Fahrbahn vor dem Kraftfahrzeug.

Aus dem Stand der Technik sind verschiedenartige Beleuchtungseinrichtungen für Kraftfahrzeuge bekannt.

Als Beispiel wird DE 10 2008 036 192 A1 genannt.

Scheinwerfer sind neben Leuchten ein Teil der Beleuchtungseinrichtungen. Sie sind im Frontbereich eines Fahrzeugs angeordnet und dienen neben der Verkehrssicherheit durch eine Sichtbarmachung des Fahrzeugs für andere Verkehrsteilnehmer insbesondere der Ausleuchtung der Fahrbahn vor dem Fahrzeug, z.B. in Form einer Abblendlicht-, Fernlicht- oder Nebellichtverteilung sowie in Form von an bestimmte Umgebungs- und/oder Fahrsituationen anpassbaren Lichtfunktionen, wie bspw. Kurvenlicht, Stadtlicht, Landstraßenlicht, Autobahnlicht, etc., jeweils um die Sicht für den Fahrer zu verbessern. Scheinwerfer umfassen mindestens eine Lichtquelle in Form einer Glühlampe, Gasentladungslampe oder Halbleiterlichtquelle. Sie arbeiten nach einem Reflexionsprinzip, wobei von der Lichtquelle ausgesandtes Licht zur Erzeugung einer gewünschten Lichtverteilung durch einen Reflektor auf die Fahrbahn vor das Fahrzeug reflektiert wird, oder nach einem Projektionsprinzip, wobei von der Lichtquelle ausgesandtes Licht nach der Bündelung durch eine Primäroptik, bspw. in Form eines Reflektors oder einer Vorsatzoptik, zur Erzeugung einer gewünschten Lichtverteilung durch eine Sekundäroptik, bspw. in Form einer Projektions- oder Sammellinse, auf die Fahrbahn vor das Fahrzeug projiziert wird. Eine Vorsatzoptik besteht aus transparentem Kunststoff- oder Glasmaterial und nutzt zur Bündelung des Lichts totalreflektierende und brechende (refraktive) Eigenschaften an den Grenzflächen zwischen dem Material und der Umgebung.

Zur Erzeugung einer horizontalen Hell-Dunkel-Grenze, bspw. für Abblendlicht oder Nebellicht, ist in den nach dem Projektionsprinzip arbeitenden bekannten Scheinwerfern im Strahlengang zwischen Primär- und Sekundäroptik eine Blende bzw. eine Blendenanordnung umfassend mehrere Blendenelemente derart angeordnet, dass bei einer im Wesentlichen vertikal stehenden Blende deren Oberkante bzw. bei einer im Wesentlichen horizontal liegenden Blende deren in Lichtaustrittsrichtung befindliche Vorderkante von der Sekundäroptik als Hell-Dunkel-Grenze auf die Fahrbahn vor das Fahrzeug projiziert wird.

In den bekannten Scheinwerfern sind oft auch Leuchtenfunktionen, wie z.B. Positionslicht, Begrenzungslicht, Blinklicht oder Tagfahrlicht, mit integriert. Diese Leuchtenfunktionen können allerdings auch als separate Leuchte im Kraftfahrzeug realisiert sein.

Die Scheinwerfer umfassen ein Gehäuse, in dem das mindestens eine Lichtmodul angeordnet ist. Das Gehäuse weist eine Lichtaustrittsöffnung auf, die durch eine transparente Abdeckscheibe aus Glas oder Kunststoff verschlossen ist. Die Abdeckscheibe kann als eine klare Scheibe ohne optisch wirksame Profile (z.B. Prismen) oder zumindest bereichsweise mit optisch wirksamen Profilen ausgebildet sein. Die Abdeckscheibe kann zumindest bereichsweise eingefärbt sein.

Durch den Einbau von immer mehr technischen Einrichtungen in ein Kraftfahrzeug und die damit einhergehenden immer enger werdenden Platzverhältnisse im Frontend bzw. im Motorraum eines Kraftfahrzeugs ist es erstrebenswert, die technischen Einrichtungen so kompakt wie möglich zu bauen. Ein möglichst freier Zugang zu den Einrichtungen, bspw. für den Service- oder Reparaturfall, sollte dabei berücksichtigt werden. Genauso sollten Wärmestaus vermieden werden. So ist es u.a. das Ziel, auch Scheinwerfer möglichst kompakt zu bauen und dabei eine gute Wärmeableitung zu gewährleisten, um die Funktionsfähigkeit der Scheinwerfer für einen möglichst langen Zeitraum gewährleisten zu können.

Die EP 1 357 332 A2 zeigt bereits ein relativ kompakt aufgebautes Lichtmodul für einen Kraftfahrzeugscheinwerfer, wobei das Lichtmodul eine auf einer optischen Achse des Lichtmoduls angeordnete Halbleiterlichtquelle aufweist, die als Leuchtdiode ausgebildet ist. Das ausgesandte Licht der Leuchtdiode stahlt im Wesentlichen orthogonal zur optischen Achse des Lichtmoduls ab. Anschließend wird das ausgesandte Licht von einer als Halbschalenreflektor ausgebildeten Primäroptik in Richtung einer verspiegelten und in einer horizontalen Ebene umfassend die optische Achse des Lichtmoduls angeordneten Blende gebündelt. Das an der Blende vorbei gelangte Licht sowie zumindest ein Teil des von der Blende reflektierten oder gespiegelten Lichts wird dann von einer als Projektionslinse ausgebildeten Sekundäroptik gesammelt und auf die Fahrbahn projiziert. Durch die Verwendung der verspiegelten und horizontal, auf der optischen Achse des Lichtmoduls angeordneten Blende kann der Wirkungsgrad des Lichtmoduls erhöht werden, weil sogar das von der Blende abgeschattete Licht zumindest teilweise zur Erzeugung der Lichtverteilung beiträgt.

Nachteilig bei dem bekannten Lichtmodul ist jedoch, dass für die typischerweise notwendige hohe Lichtstärke von Scheinwerfern bzw. der durch diese erzielten Lichtfunktionen eine Leuchtdiode mit hoher Leuchtdichte benötigt wird. Dazu muss jedoch die Leuchtdiode in einem für die Energieeffizienz der Leuchtdiode ungünstigen Arbeitspunkt betrieben werden, der nahe an der maximal möglichen Bestromung der Leuchtdiode liegt. Dabei wird vergleichsweise viel Wärme erzeugt, die abgeleitet werden muss. Wird ein günstigerer Arbeitspunkt gewählt, so sinkt die Leuchtdichte und die geforderten Lichtstärke kann nicht erreicht werden. Zur Erzielung der hohen Lichtstärke können auch mehrere separate Lichtmodule eingesetzt werden, was allerdings wieder zu einer weniger kompakten Lösung führen würde.

Aufgabe der Erfindung ist es deshalb, ein Lichtmodul der eingangs genannten Art derart auszugestalten und weiterzubilden, dass das Lichtmodul einerseits kompakt ausgebildet und energieeffizient betrieben werden kann und andererseits aber einen möglichst hohen Lichtstrom aufweist, der vorzugsweise zur Erzeugung nicht nur eines Teils der Lichtverteilung der gewünschten Lichtfunktion, sondern der gesamten Lichtverteilung ausreicht.

Zur Lösung der Aufgabe wird ein Lichtmodul nach Anspruch 1 vorgeschlagen.

Der Erfindung liegt die Idee zu Grunde, mehrere z.B. als Leuchtdioden ausgestaltete Halbleiterlichtquellen (vorzugsweise mindestens drei Halbleiterlichtquellen) in einem Lichtmodul in der Weise anzuordnen, dass einerseits eine kompakte Anordnung der Halbleiterlichtquellen gefunden wird und die Halbleiterlichtquellen andererseits besonders energieeffizient in einem günstigen Arbeitspunkt betrieben werden können, so dass das Lichtmodul einerseits eine hohe Leuchtdichte erreicht und andererseits von den Halbleiterlichtquellen besonders wenig Abwärme erzeugt wird. Um die optischen Verluste des Lichtmoduls zu verringern und dessen Wirkungsgrad zu verbessern, können als Vorsatzoptiken ausgebildete Primäroptiken eingesetzt werden, die das Prinzip der Totalreflexion sowie der Brechung bzw. Refraktion an den Grenzflächen des transparenten Materials und der Umgebung ausnutzen und die gegenüber herkömmlichen Reflektoren geringere Absorptionsverluste aufweisen.

Insbesondere zwei Aspekte sind für die vorliegende Erfindung von besonderer Bedeutung: Zum einen werden die Halbleiterlichtquellen in einem besonders effizienten Arbeitspunkt betrieben, wodurch sie einen höheren Lichtstrom bei gegebener elektrischer Leistung erzeugen (mehr Lumen/ Watt). Zur Erzielung eines gegebenen Lichtstroms werden zwar mehr Halbleiterlichtquellen als bei bisherigen Lichtmodulen benötigt, diese können aber besonders energieeffizient betrieben werden, so dass sich in der Summe ein geringerer Energieverbrauch des erfindungsgemäßen Lichtmoduls ergibt. Außerdem bewirkt der Betrieb der Halbleiterlichtquellen in ihren Arbeitspunkten geringere elektrische und thermische Belastungen und damit eine größere Lebensdauer der Halbleiterlichtquellen.

Ein weiterer Aspekt betrifft die höhere Anzahl an Halbleiterlichtquellen, die über eine größere Fläche verteilt auf dem Kühlkörper angeordnet sind. Die im Rahmen der Erzeugung eines gegebenen Lichtstroms generierte Wärme wird also über eine größere Fläche verteilt an den Kühlkörper abgegeben, so dass ein besonders effizienter Wärmeabtransport über den Kühlkörper gewährleistet ist. Bei der Erfindung ist also die Anzahl der punktuellen Wärmequellen größer, die Wärme ist von Anfang an besser, das heißt gleichmäßiger, über den Kühlkörper verteilt.

Durch den verbesserten Wärmeabtransport ergibt sich eine geringere Betriebstemperatur der Halbleiterlichtquellen, so dass sie einen höheren Lichtstrom bei gleicher Leistung erzeugen. Die beiden genannten Aspekte stehen in einer Wechselwirkung zueinander und führen unter dem Strich zu einem besonders effizienten, robusten, zuverlässigen und langlebigen Lichtmodul.

Durch die Ausgestaltung, Anordnung und Ausrichtung der Halbleiterlichtquellen mit den diesen zugeordneten Primäroptiken derart, dass die optischen Achsen der Primäroptiken in mindestens einer Ebene verlaufen, welche die horizontale Ebene der Blende schneidet, kann ein besonders kompakter Aufbau des Lichtmoduls realisiert werden. Gleichzeitig können so viele Halbleiterlichtquellen ohne Wärmeprobleme so dicht aneinander positioniert werden, dass die geforderten Lichtstärkewerte für die resultierende Lichtverteilung durch das eine Lichtmodul erreicht werden. Durch die relativ große Anzahl an Halbleiterlichtquellen des Lichtmoduls können die einzelnen Lichtquellen mit einem Betriebsstrom unterhalb des maximal möglichen Stroms und damit in einem besonders effizienten Betriebspunkt betrieben werden. Die Folge sind ein besonders effizienter Betrieb sowie mehr Lichtstrom bei gegebener elektrischer Leistung.

Besonders bevorzugt ist eine Anordnung der Halbleiterlichtquellen und der Primäroptiken in mehreren zur horizontalen Ebene des Lichtmoduls unterschiedlich geneigten Ebenen, die es ermöglichen, durch eine enge Anordnung mehrerer Halbleiterlichtquellen nicht nur auf einer Ebene in horizontaler Richtung nebeneinander, sondern auch in unterschiedlichen Ebenen in vertikaler Richtung übereinander anzuordnen. Auf diese Weise können hinreichend hohe Lichtstärken in der Blendenebene und somit in der Lichtverteilung des Lichtmoduls erzeugt werden, ohne dass die einzelnen Halbleiterlichtquellen eine sehr hohe Leuchtdichte aufweisen und hoch bestromt werden müssen. Insbesondere ist an eine Anordnung der Halbleiterlichtquellen in zwei zur horizontalen Ebene des Lichtmoduls geneigten Ebenen gedacht. Um eine einfache Herstellung zu ermöglichen und die kompakte Bauweise einzuhalten, ist es jedoch vorteilhaft, die Halbleiterlichtquellen auf möglichst wenig Ebenen zu positionieren.

Vorteilhaft ist auch, wenn die Halbleiterlichtquellen des Lichtmoduls auf einem gemeinsamen Kühlkörper angeordnet sind. Dabei können die Halbleiterlichtquellen zunächst auf einer Platine angeordnet und über diese elektrisch kontaktiert sein, wobei die Platine auf dem Kühlkörper positioniert ist. Die Halbleiterlichtquellen können aber auch direkt auf dem Kühlkörper angeordnet und anderweitig kontaktiert werden. Ein guter wärmetechnischer Übergang der Halbleiterlichtquellen zum Kühlkörper bzw. zur Platine und der Platine zum Kühlkörper muss dabei in jedem Fall sichergestellt werden. Dadurch wird eine effiziente Kühlung der Halbleiterlichtquellen gewährleistet. Andererseits weist der Kühlkörper durch eine verteilte Anordnung der Wärmequellen (in Form der Halbleiterlichtquellen) einen niedrigen thermischen Widerstand auf. Dies ergibt sich dadurch, dass die Temperaturgradienten innerhalb des Kühlkörpers besonders gering sind. Dies ist insbesondere deshalb wichtig, da vom thermischen Widerstand des Kühlkörpers die Höhe der Sperrschichttemperatur der Halbleiterlichtquellen abhängt. Je niedriger die Sperrschichttemperatur ist, desto höher ist die Effizienz der Halbleiterlichtquelle. Die Verteilung der Wärmequellen auf dem Kühlkörper über eine größere Fläche ermöglicht bei gegebenem Kühlkörper eine effizientere Kühlung und damit eine niedrigere Betriebstemperatur der Halbleiterlichtquellen, was schließlich zu einem höheren Lichtstrom bei gegebener Leistung (mehr Lumen/ Watt) führt.

Bei dem erfindungsgemäßen Lichtmodul fällt die erzeugte Wärme nicht konzentriert an wenigen diskreten Punkten an, sondern sie wird durch die Vielzahl von Halbleiterlichtquellen von Anfang an über eine große Fläche an den Kühlkörper abgegeben. Das führt zu einer gleichmäßigen Erwärmung des Volumens des Kühlkörpers und damit zu geringen Temperaturgradienten innerhalb des Kühlkörpers, so dass sich ein besonders geringer thermischer Widerstand einstellt. Der Kühlkörper kann die von den Halbleiterlichtquellen aufgenommene Wärme gleichmäßig an die umgebende Luft abgeben.

Gerade die Verwendung mehrerer Halbleiterlichtquellen erweist sich hier für die Energieeffizienz des gesamten Lichtmoduls als vorteilhaft, da durch den Betrieb der Halbleiterlichtquellen in einem günstigen Arbeitspunkt mit höherer Energieeffizienz auch insgesamt weniger Wärme erzeugt wird.

Besonders vorteilhaft ist dabei, wenn der Betrieb der Halbleiterlichtquellen bei einer Stromstärke von unter 50% einer maximal möglichen Stromstärke erfolgt. Um eine hohe Energieeffizienz des Lichtmoduls zu erreichen, wird die Halbleiterlichtquelle also merklich niedriger bestromt als maximal möglich, bevorzugt bei ca. 35% der maximal möglichen Stromstärke. Ab diesem Arbeitspunkt fällt bei den derzeit bekannten Halbleiterlichtquellen die Effizienz in der Regel deutlich ab. Durch einen solchen Betrieb erzeugt zwar jede Halbleiterlichtquelle weniger Lichtstrom bzw. leuchtet mit geringerer Leuchtdichte, aber die Effizienz der Halbleiterlichtquelle ist merklich höher als bei einer hohen Bestromung. Die geringere Leuchtdichte der Halbleiterlichtquelle durch die geringere Bestromung wird durch die Erhöhung der Anzahl an Halbleiterlichtquellen und einer geeigneten Überlagerung der von den Halbleiterlichtquellen mit Primäroptiken erzeugten Teillichtbündeln, insbesondere in der Umgebung der Blendenvorderkante, kompensiert. Um bei einem Betrieb einer bestimmten Anzahl an Halbleiterlichtquellen eines Lichtmoduls bei einem Betriebsstrom von ungefähr einem Drittel des maximal möglichen Stroms einen ähnlichen Gesamtlichtstrom wie bei maximal möglicher Bestromung zu erreichen, müssen bspw. nur ca. doppelt so viele Halbleiterlichtquellen (und nicht etwa dreimal so viele) eingesetzt werden. Dies ist bedingt durch einen nicht linearen Verlauf einer Zuordnung der elektrischen Stromstärke einer Halbleiterlichtquelle zu dem von der Halbleiterlichtquelle erzeugten Lichtstrom.

Bei dem Lichtmodul mit der mindestens einen Halbleiterlichtquelle handelt es sich erfindungsgemäß um ein Lichtmodul zur Erzeugung einer abgeblendeten Lichtverteilung mit einer im Wesentlichen horizontalen Helldunkelgrenze, bspw. einer Abblendlichtverteilung (mit asymmetrischer Helldunkelgrenze) oder einer Nebel- oder Schlechtwetterlichtverteilung (mit ebener Helldunkelgrenze). Es ist vorteilhaft, wenn das Lichtmodul über mindestens eine weitere Halbleiterlichtquelle verfügt, die unterhalb der horizontalen Ebene der Blende angeordnet ist, und wenn die mindestens eine weitere Halbleiterlichtquelle derart ausgerichtet ist, dass ihre optische Achse die horizontale Ebene schneidet. Dadurch können Lichtfunktionen, bei denen Licht oberhalb einer Helldunkelgrenze erzeugt wird, wie z.B. bei Fernlicht oder Tagfahrlicht, realisiert werden. Die weiteren Halbleiterlichtquellen können dabei mit oder ohne bündelnde Primäroptik betrieben werden.

Ergänzend dazu wird vorgeschlagen, dass die Halbleiterlichtquellen und/oder die weiteren Halbleiterlichtquellen einzeln oder gruppenweise ansteuerbar oder dimmbar sind. Insbesondere um Leuchtenfunktionen, wie bspw. das Tagfahrlicht oder ein Begrenzungslicht im Scheinwerfer zu erzeugen, kann es unter Umständen nötig sein, die über und unter der horizontalen Ebene angeordneten Leuchtdioden zu dimmen und/oder nur einen Teil der dort vorhandenen Halbleiterlichtquellen leuchten zu lassen. Bei Tagfahrlicht kann bspw. vorgesehen sein, dieses beim Aktivieren eines Blinklichts zu dimmen, um das Blinklicht für andere Verkehrsteilnehmer besser sichtbar zu machen. Ebenso kann es möglich sein, ein an sich zur Erzeugung einer Fernlichtverteilung vorgesehenes Lichtmodul zur Erzeugung einer Tagfahrlichtverteilung zu nutzen. Dies ist durchaus möglich, da sich die gesetzlichen Anforderungen an die Lichtverteilungen für Fernlicht und Tagfahrlicht im Wesentlichen nur durch die Lichtstärke werte unterscheiden. Diese können durch Dimmen der Halbleiterlichtquellen angepasst werden. Zur Realisierung können die Halbleiterlichtquellen gruppenweise oder sogar einzeln über zwei oder mehr Kanäle angesteuert werden. So kann bspw. ein erster Teil der Halbleiterlichtquellen über einen ersten Kanal angesteuert werden, um auf diese Weise z.B. ein Stadtlicht zu realisieren. Durch Zuschalten eines weiteren Teils der Halbleiterlichtquellen über einen zweiten Kanal kann z.B. ein Landstraßenlicht erzeugt werden, das eine breitere Ausleuchtung der Fahrbahn bewirkt.

Außerdem ist vorteilhaft, dass die Primäroptik neben der bündelnden Wirkung auch eine ablenkende Wirkung aufweist und/oder dass mindestens eine der Primäroptiken bezüglich ihrer optischen Achse asymmetrisch ausgebildet ist. Zur Erzeugung der Ablenkung kann die Primäroptik also auch als Prisma wirken. Durch die ablenkende Wirkung der Primäroptik, die durch eine asymmetrische Form der Primäroptik erreicht werden kann, kann die optische Achse der Primäroptik gekippt werden. Die Ausgestaltung der Lichtaustrittsfläche der Primäroptik in Bezug auf die Grenzflächen bestimmt dabei einen Kippwinkel der optischen Achse. Das ist kann dann sinnvoll sein, wenn die Halbleiterlichtquellen alle in einer Ebene angeordnet sind, die optischen Achsen der Primäroptiken aber in sich gegenseitig und die horizontale Ebene schneidenden Ebenen verlaufen sollen. Das Verkippen der optischen Achsen bedeutet, dass die aus der Primäroptik austretenden Lichtstrahlen unterschiedlich abgelenkt werden und dass sich die so abgelenkten Lichtstrahlen im Bereich eines abgelenkten Fokuspunkts der Primäroptik treffen.

Vorteilhaft ist auch, wenn die Sekundäroptik Mittel zur Farbkorrektur aufweist. Die hohe Anzahl an Leuchtdioden mit Primäroptiken führt zwangsläufig zu einer hohen objektseitigen Apertur, die von der Sekundäroptik abzubilden und einzufangen ist. Diese hohe Apertur führt zu wahrnehmbaren, chromatischen Abbildungsfehlern. Um eine möglichst farbneutrale Hell-Dunkel-Grenze auf der Fahrbahn zu erzeugen, kann daher eine Farbkorrektur durch die Sekundäroptik erfolgen (siehe bspw. Wördenweber, Wallaschek, Boyce & Hoffman, 2007, S. 105f.). Weitere Möglichkeiten hierzu bestehen in der Verwendung eines achromatischen Linsenpaares (siehe bspw. Perez, 1996, S. 118f.), einer Linse mit Frostung, Modulation oder Mikrostrukturierung (siehe bspw. Wördenweber, Wallaschek, Boyce, & Hoffman, 2007, S. 242f.) oder einer diffraktiv strukturierten Linse (siehe bspw. Brinkmann, Pawlowski, Rohlfing & Stauss, 2007). Andere Möglichkeiten zur Farbkorrektur sind denkbar.

Ferner ist vorteilhaft, wenn die Sekundäroptik entlang ihrer optischen Achse verschiebbar ist. Dadurch kann der Abstand von Sekundäroptik zur Blendenvorderkante eingestellt werden, um die Schärfe und die Farbigkeit der Hell-Dunkel-Grenze einzustellen. Unter Umständen kann eine gewisse Unschärfe der Helldunkelgrenze gewünscht sein, um bei unebener Fahrbahn oder bei um die Querachse schwankendem Fahrzeug die subjektiv störenden Auswirkungen einer Auf- und Abbewegung der Helldunkelgrenze zu verringern bzw. zu vermeiden. Durch die bewegliche Sekundäroptik kann die Schärfe bzw. Unschärfe der Helldunkelgrenze sogar in Abhängigkeit von Umgebungsbedingungen und/oder Fahrzeugzuständen dynamisch variiert werden.

Außerdem ist vorteilhaft, wenn die Blende zumindest bereichsweise verspiegelt ist. Die Blende erstreckt sich in dem erfindungsgemäßen Lichtmodul in einer im Wesentlichen horizontalen Ebene entlang einer horizontalen Achse, die im Wesentlichen der optischen Achse der Sekundäroptik entspricht. Eine leichte Schrägstellung der Blende relativ zur horizontalen Ebene ist möglich. Außerdem kann die Blende zur vorderen Kante hin spitz zulaufen. Sie ist vorzugsweise verspiegelt, um auch die auf die Blende treffende Strahlen nutzen zu können, um so den optischen Wirkungsgrad des Lichtmoduls zu erhöhen. Die Blende kann in einer weiteren Ausgestaltung auch mit dem Kühlkörper eine bauliche Einheit bilden.

Weitere Merkmale und Vorteile der Erfindung ergeben sich aus der nachfolgenden Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Figuren dargestellt und werden in der nachfolgenden Beschreibung näher erläutert. Es zeigen, jeweils in schematischer Form:
- Figur 1: ein erfindungsgemäßes Lichtmodul in einer Seitenansicht in einem vertikalen Schnitt in einer ersten Ausführungsform;
- Figur 2: das erfindungsgemäße Lichtmodul aus Figur 1 in einer perspektivischen Ansicht;
- Figur 3: ein Diagramm mit einer Zuordnung einer Betriebsstromstärke I zu einem Lichtstrom Φ beim Betrieb von Leuchtdioden;
- Figur 4: ein Diagramm mit einer Zuordnung der Betriebsstromstärke I zu einer Energieeffizienz Eff;
- Figur 5 und 6: ein erfindungsgemäßes Lichtmodul in einer Seitenansicht in einem vertikalen Schnitt in einer zweiten Ausführungsform;
- Figur 7: ein erfindungsgemäßes Lichtmodul in einer Seitenansicht in einem vertikalen Schnitt in einer dritten Ausführungsform; und
- Figur 8: eine Vorsatzoptik des Lichtmoduls aus Figur 7 im Detail.

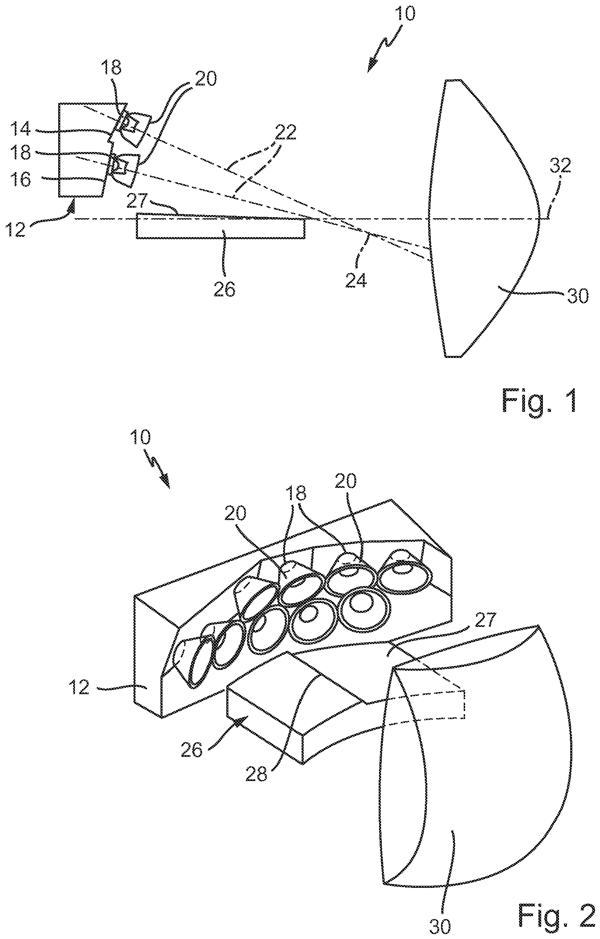

Figur 1 zeigt ein erfindungsgemäßes Lichtmodul 10 für eine Beleuchtungseinrichtung eines Kraftfahrzeugs in einer ersten Ausführungsform in einer Seitenansicht in einem vertikalen Schnitt, Figur 2 zeigt das Lichtmodul 10 in einer perspektivischen Ansicht. Das Lichtmodul 10 weist einen Kühlkörper 12 auf, der aus einem Material mit hoher thermischer Leitfähigkeit, wie z.B. Aluminium oder Kupfer, beschaffen ist. An einer konkav gekrümmten Seite des Kühlkörpers 12 sind auf zwei getrennt voneinander ausgebildeten Ebenen 14 und 16 mehrere als Leuchtdioden 18 ausgestaltete Halbleiterlichtquellen angeordnet. Die erste Ebene 14 weist vier eng zueinander angeordnete Leuchtdioden 18 auf, die zweite Ebene 16 weist fünf eng zueinander angeordnete Leuchtdioden 18 auf, so dass die Gesamtanordnung der Leuchtdioden 18 eine kompakte Einheit ergibt. Die Leuchtdioden 18 einer jeden Ebene 14 und 16 können gruppenweise angesteuert werden. Es ist auch möglich, die Leuchtdioden 18 einzeln anzusteuern, um sie je nach Bedarf einzeln ein- oder auszuschalten. Die Leuchtdioden 18 können auch einzeln bzw. gruppenweise gedimmt werden. Jeder Leuchtdiode 18 ist eine als Vorsatzoptik 20 ausgebildete Primäroptik zugeordnet. Die Vorsatzoptik 20 bündelt das von den Leuchtdioden 18 ausgesandte Licht und arbeitet vorzugsweise nach dem bekannten Prinzip der Totalreflexion sowie der Brechung bzw. Refraktion an den Grenzflächen zwischen dem transparenten Optikmaterial und der Umgebung.

Beide Ebenen 14 und 16 sind in einem gewissen Winkel zueinander verkippt ausgerichtet, so dass optische Achsen 22 der Vorsatzoptiken 20 aus der Ebene 14 sich mit optischen Achsen 22 der Vorsatzoptiken 20 aus der Ebene 16 im weiteren Verlauf in einem Fokuspunkt 24 schneiden.

Austretendes Licht aus den Vorsatzoptiken 20 wird von einer Blende 26 teilweise abgeschattet, teilweise gelangt Licht an der Blende 26 vorbei. Die Blende 26 ist mit ihrer Blendenfläche 27 horizontal angeordnet, wobei die Blendenfläche 27 auf der Seite des auftreffenden Lichts zumindest teilweise verspiegelt sein kann. Die Blendenfläche 27 weist entlang einer Lichtaustrittsrichtung der Leuchtdioden 18 eine Stufe 28 auf. In dem dargestellten Ausführungsbeispiel sind mehrere Vorsatzoptiken 20 als separate Primäroptiken vorgesehen. Selbstverständlich kann die Primäroptik auch einteilig ausgebildet sein, wobei dann verschiedene Bereiche der Primäroptik den verschiedenen Halbleiterlichtquellen 18 zugeordnete Vorsatzoptiken bilden.

Im weiteren Strahlenverlauf weist das Lichtmodul 10 eine als Sammellinse 30 ausgestaltete Sekundäroptik auf. Die Sammellinse 30 ist bikonvex, allerdings mit zwei unterschiedlich großen Radien, ausgebildet. Eine optische Achse 32 der Sammellinse 30 bzw. des Lichtmoduls 10 stellt eine horizontale Ebene des Lichtmoduls 10 dar. Die Blendenfläche 27 verläuft im Wesentlichen entlang der optischen Achse 32, bzw. der horizontalen Ebene. Die Blendenfläche 27 kann zur optischen Achse 32 auch etwas verkippt sein, so dass sich zwischen der Blendenfläche 27 und der optischen Achse 32 ein kleiner Winkel bildet (vgl. Figur 1). Das Lichtmodul 10 ist derart aufgebaut, dass der Kühlkörper 12 mit den Ebenen 14 und 16 oberhalb der optischen Achse 32 angeordnet ist, so dass die optischen Achsen 22 der Vorsatzoptiken 20 in einem spitzen Winkel die optische Achse 32 der Sammellinse 30 schneiden.

Das Lichtmodul 10 wird folgendermaßen betrieben:

Das von den Leuchtdioden 18 in beliebige Richtung ausgesandte Licht wird in den zugeordneten Vorsatzoptiken 20 gebündelt und entlang der optischen Achsen 22 aus den Vorsatzoptiken 20 gesandt. Die von den Leuchtdioden 18 dabei erzeugte Wärme wird über den Kühlkörper 12 abgeleitet. Die Blende 26 schattet einen Teil des ausgesandten Lichts zur Erzeugung einer Hell-Dunkel-Grenze für Abblendlicht oder Nebellicht vor dem Fahrzeug ab, der restliche Anteil des ausgesandten Lichts trifft auf die Sammellinse 30 und wird von dieser in einer gewünschten Lichtverteilung unter der Berücksichtigung der Realisierung der Hell-Dunkel-Grenze auf die Fahrbahn vor dem Fahrzeug projiziert. Die Stufe 28 auf der Blende 26 erzeugt dabei einen gesetzlich vorgeschriebenen Knick in der Projektion der Hell-Dunkel-Grenze vor dem Fahrzeug, durch den ein Fahrbahnrand vor dem Fahrzeug besser ausgeleuchtet wird.

Die Leuchtdioden 18 werden mit nur ca. 35% einer maximal möglichen Stromstärke betrieben. Dieser Arbeitspunkt stellt bei den z.Z. gängigen Leuchtdioden einen günstigen Arbeitspunkt mit einer hohen Energieeffizienz dar, das heißt die Leuchtdioden liefern in ihrem Arbeitspunkt einen besonders hohen Lichtstrom pro elektrischer Leistung (viel Lumen/Watt).

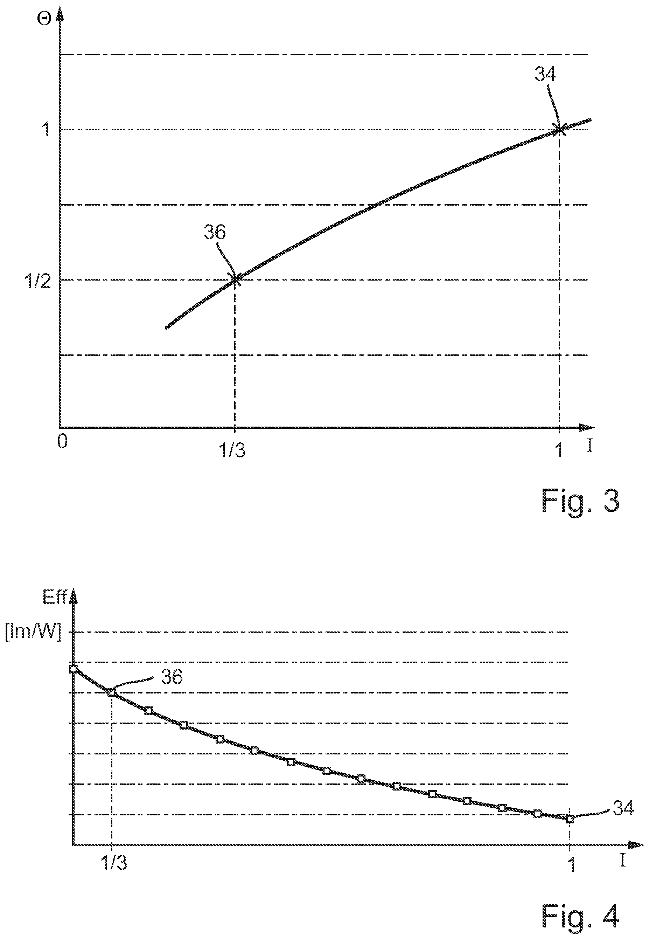

Figur 3 zeigt dazu ein Diagramm mit einer Zuordnung einer Betriebsstromstärke I zu einem Lichtstrom Φ beim Betrieb der Leuchtdioden 18. Außerdem zeigt Figur 4 ein Diagramm mit einer Zuordnung der Betriebsstromstärke I zu einer Energieeffizienz Eff. Der Ursprung der Koordinatenachsen aus Figur 4 entspricht nicht einem Nullpunkt der Betriebsstromstärke I; der Nullpunkt liegt außerhalb des Diagramms. Das Bezugszeichen 34 gibt jeweils einen Arbeitspunkt bei einer maximal möglicher Bestromung (I=1) an, das Bezugszeichen 36 zeigt jeweils den für das Lichtmodul 10 gewählten günstigen Arbeitspunkt. Wie aus Figur 3 und Figur 4 ersichtlich ist, sind die gezeigten Charakteristiken nicht linear. So ist insbesondere aus Figur 3 ersichtlich, dass bei einer um reduzierten maximalen Betriebsstromstärke I (gewählter Arbeitspunkt 36) der Lichtstrom Φ nur um ca. die Hälfte verringert ist. Das bedeutet, dass bei einem Betrieb im Arbeitspunkt 36 durch eine Verdopplung der Leuchtdioden 18 der gleiche Lichtstrom erzeugt wird, wie bei maximaler Bestromung (Arbeitspunkt 34) und hälftiger Anzahl von Leuchtdioden 18 nötig wären. Da die dabei erzeugte Wärme im Wesentlichen proportional zur Betriebsstromstärke I anzunehmen ist, entspricht die erzeugte Wärme in dem gewählten Arbeitspunkt 36 nur ca. einem Drittel der Wärme, als bei maximaler Bestromung anfallen würde. Durch die Vielzahl der eng und kompakt angeordneten Leuchtdioden 18, die über den gesamten Kühlkörper 12 im Wesentlichen gleichmäßig verteilt sind, erwärmt sich der Kühlkörper 12 gleichmäßig über sein gesamtes Volumen und die erzeugte Wärme kann besonders gut über den Kühlkörper 12 abgeführt werden.

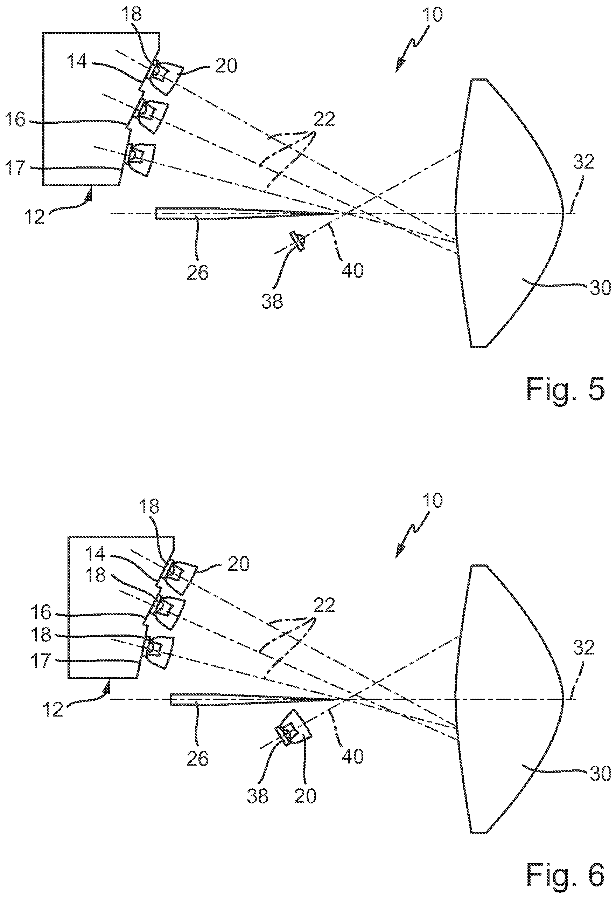

Die Figuren 5 und 6 zeigen eine zweite Ausführungsform des Lichtmoduls 10. In dieser Ausführungsform weist der Kühlkörper 12 drei Ebenen 14, 16 und 17 auf, die alle drei, wie in der ersten Ausführungsform in einem gewissen Winkel zueinander verkippt ausgerichtet sind. Der wesentliche Unterschied zur ersten Ausführungsform ist jedoch eine unterhalb der optischen Achse 32 (oder horizontalen Ebene) des Lichtmoduls 10 angeordnete weitere Leuchtdiode 38, die mit (vgl. Figur 6) oder ohne (vgl. Figur 5) Vorsatzoptik 20 betrieben werden kann. Mehrere dort angeordnete Leuchtdioden 38 sind natürlich auch möglich (nicht dargestellt). Eine optische Achse 40 der Leuchtdiode 38 schneidet ebenfalls in einem spitzen Winkel die optische Achse 32 der Sammellinse 30. Die Leuchtdiode 38 ist derart im Lichtmodul 10 positioniert, dass sie - von der horizontalen Ebene ausgehend - im Wesentlichen unterhalb der Blende 26 angeordnet ist, so dass das ausgesandte Licht der Leuchtdiode 38 teilweise von der Blende 26 abgeschattet wird und teilweise an der Blende 26 vorbei gelangt.

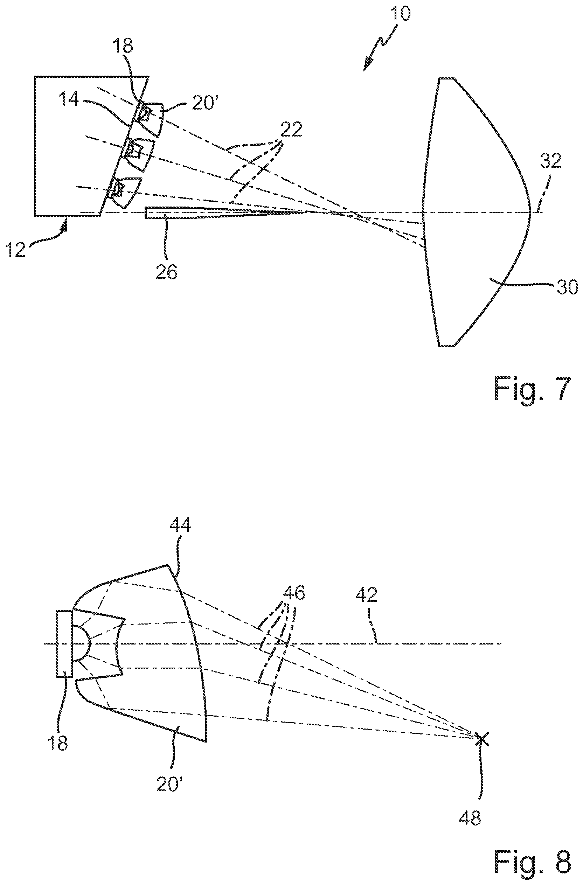

Vorzugsweise ist die Leuchtdiode 38 seitlich versetzt zu einer vertikalen, die optische Achse 32 des Lichtmoduls 10 umfassenden vertikalen Mittelebene angeordnet und so ausgerichtet, dass die optische Achse 40 der Leuchtdiode 38 auf einen Bereich oberhalb einer asymmetrischen Hell-Dunkel-Grenze in der Nähe eines Übergangs von einem niedrigeren Abschnitt der Hell-Dunkel-Grenze, der auf der Verkehrsseite entgegenkommender Verkehrsteilnehmer angeordnet ist, zu einem höheren Abschnitt, der auf der eigenen Verkehrsseite angeordnet ist, gerichtet ist. Dadurch ergibt sich eine Schrägstellung der Leuchtdiode 38, so dass sie geringfügig in Richtung der vertikalen Mittelebene seitlich geneigt ist. Alternativ kann die Vorsatzoptik 20 der weiteren Leuchtdiode 38 auch als eine asymmetrische Vorsatzoptik 20' (vgl. Figur 8) ausgebildet sein. In diesem Fall könnte die Leuchtdiode 38 ohne eine Schrägstellung oder mit geringerer Schrägstellung angeordnet sein, wobei sie die schräge Ausrichtung der optischen Achse 40 der Leuchtdiode 38 durch eine entsprechende asymmetrische Ausgestaltung der Vorsatzoptik 20' ergeben könnte.

Die zweite Ausführungsform bringt folgenden funktionalen Zusatzeffekt:

Das ausgesandte Licht der weiteren Leuchtdiode 38 kann zusätzlich einen Bereich oberhalb der Hell-Dunkel-Grenze vor dem Fahrzeug ausleuchten, so wie es bspw. bei einem Fernlicht oder Tagfahrlicht gefordert ist. Vorzugsweise wird durch die Leuchtdiode 38 ein Bereich oberhalb einer asymmetrischen Hell-Dunkel-Grenze in der Nähe eines Übergangs von dem niedrigeren Abschnitt der Hell-Dunkel-Grenze zu dem höheren Abschnitt auf der eigenen Verkehrsseite besonders stark ausgeleuchtet, das heißt die maximale Beleuchtungsstärke der von der weiteren Leuchtdiode 38 ausgesandten Lichtverteilung befindet sich in dem genannten Bereich oberhalb der Hell-Dunkel-Grenze in der Nähe des Übergangs zwischen den asymmetrischen Abschnitten der Hell-Dunkel-Grenze. Eine gesetzlich geforderte geringere Lichtstärke beim Tagfahrlicht gegenüber dem Fernlicht kann durch Dimmen der Leuchtdioden 18 und/oder der Leuchtdiode 38, bzw. bei Verwendung mehrerer weiterer Leuchtdioden 38 auch durch ein gezieltes Dimmen einzelner Leuchtdioden 38, erreicht werden. Auch ein Abschalten von einzelnen Leuchtdioden 18 bzw. 38 zur Reduzierung der Lichtstärke ist bei einzeln ansteuerbaren Leuchtdioden 18 bzw. 38 natürlich auch möglich.

Figur 7 zeigt eine dritte Ausführungsform des Lichtmoduls 10. In diesem dritten Ausführungsbeispiel sind Leuchtdioden 18 zwar in drei Reihen übereinander, aber auf einer gemeinsamen Ebene 14 des Kühlkörpers 12 angeordnet. Die den Leuchtdioden 18 zugeordneten Vorsatzoptiken 20' sind in Bezug auf deren optische Achsen 22 hier asymmetrisch ausgebildet. Dadurch wird erreicht, dass die Vorsatzoptiken 20' neben ihrer bündelnden Wirkung auf die von der Leuchtdiode 18 ausgesandten Lichtstrahlen außerdem eine ablenkende Wirkung aufweisen. Die Ablenkung der Lichtstrahlen in der Vorsatzoptik 20' kompensiert die winklige Verkippung der verschiedenen Ebenen 14, 16, 17 auf den Kühlkörpern 12 der ersten und zweiten Ausführungsformen, so dass in der dritten Ausführungsform ein im Wesentlichen gleicher Verlauf der optischen Achsen 22 der Vorsatzoptiken 20' erzeugt wird, wie der Verlauf der optischen Achsen 22 der Vorsatzoptiken 20 in den beiden zuvor beschriebenen Ausführungsformen.

Figur 8 zeigt eine solche asymmetrisch ausgebildete Vorsatzoptik 20' im Detail. Die Vorsatzoptik 20' weist zu einer optischen Achse 42 der Leuchtdiode 18 einen asymmetrischen Verlauf einer Lichtaustrittsfläche 44 der Vorsatzoptik 20' auf. In Figur 8 sind dazu unterschiedliche Strahlenverläufe 46 der von der Leuchtdiode 18 ausgesandten Lichtstrahlen dargestellt. Es ist zu erkennen, dass die Lichtstrahlen 46 je nach einem Auftreffpunkt an der asymmetrischen Lichtaustrittsfläche 44 unterschiedlich stark gebrochen bzw. abgelenkt werden, so dass sich die Lichtstrahlen 46 in einem gemeinsamen Fokuspunkt 48 treffen. Durch den Fokuspunkt 48 verläuft auch die optische Achse der Vorsatzoptik 20'. Die Vorsatzoptik 20' wirkt wegen der ablenkenden Wirkung also auch als Prisma.

## Patentansprüche

1. Lichtmodul (10) für eine Beleuchtungseinrichtung eines Kraftfahrzeugs mit mindestens einer Halbleiterlichtquelle (18) zum Aussenden von Licht, mindestens einer Primäroptik (20; 20') zum Bündeln des ausgesandten Lichts, einer Blende (26), die sich in einer eine optische Achse (32) des Lichtmoduls (10) umfassenden, im Wesentlichen horizontalen Ebene erstreckt, zum Abschatten eines Teils des gebündelten Lichts und mit einer Sekundäroptik (30) zum Abbilden des an der Blende (26) vorbei gelangten Teils des Lichts sowie eines von der Blende (26) reflektierten Teils des Lichts zur Erzeugung einer gewünschten Lichtverteilung mit einer im wesentlichen horizontalen Helldunkelgrenze auf der Fahrbahn vor dem Kraftfahrzeug, wobei das Lichtmodul (10) mehrere Halbleiterlichtquellen (18) mit mindestens einer diesen zugeordneten Primäroptik (20; 20') umfasst, die derart ausgerichtet und ausgebildet ist, dass die optische Achse (22) der mindestens einen Primäroptik (20; 20') in mindestens einer Ebene verläuft, welche die horizontale Ebene der Blende (26) schneidet, **dadurch gekennzeichnet, dass** die Sekundäroptik (30) dynamisch in Abhängigkeit von Umgebungsbedingungen und/oder Fahrzeugzuständen entlang ihrer optischen Achse verschiebbar ist, um die Schärfe und Farbigkeit der Hell-Dunkel-Grenze einzustellen.

2. Lichtmodul (10) nach Anspruch 1, **dadurch gekennzeichnet, dass** die Halbleiterlichtquellen (18) und die Primäroptiken (20; 20') derart ausgerichtet und ausgebildet sind, dass die optischen Achsen (22) der Primäroptiken (20; 20') in mehreren, vorzugsweise in zwei, Ebenen verlaufen, welche sich gegenseitig und jeweils die horizontale Ebene der Blende (26) schneiden.

3. Lichtmodul (10) nach Anspruch 1 oder 2, **dadurch gekennzeichnet, dass** die Halbleiterlichtquellen (18) des Lichtmoduls (10) auf einem gemeinsamen Kühlkörper (12) angeordnet sind.

4. Lichtmodul (10) nach einem der vorhergehenden Ansprüche, **dadurch gekennzeichnet, dass** der Betrieb der Halbleiterlichtquellen (18) bei einer Stromstärke von unter 50% einer maximal möglichen Stromstärke erfolgt.

5. Lichtmodul (10) nach einem der vorhergehenden Ansprüche, **dadurch gekennzeichnet, dass** die Halbleiterlichtquellen (18) oberhalb der horizontalen Ebene der Blende (26) angeordnet sind.

6. Lichtmodul (10) nach Anspruch 4, **dadurch gekennzeichnet, dass** mindestens eine weitere Halbleiterlichtquelle (38) unterhalb der horizontalen Ebene der Blende (26) angeordnet ist.

7. Lichtmodul (10) nach Anspruch 6, **dadurch gekennzeichnet, dass** die mindestens eine weitere Halbleiterlichtquelle (38) derart ausgerichtet ist, dass ihre optische Achse (40) die horizontale Ebene der Blende (26) schneidet.

8. Lichtmodul (10) nach einem der vorhergehenden Ansprüche, **dadurch gekennzeichnet, dass** die Halbleiterlichtquellen (18) und/oder die weiteren Halbleiterlichtquellen (38) einzeln oder gruppenweise ansteuerbar oder dimmbar sind.

9. Lichtmodul (10) nach einem der vorhergehenden Ansprüche, **dadurch gekennzeichnet, dass** mindestens eine der Primäroptiken (20') neben der bündelnden Wirkung auch eine ablenkende Wirkung aufweist.

10. Lichtmodul (10) nach Anspruch 8, **dadurch gekennzeichnet, dass** die mindestens eine Primäroptik (20') bezüglich ihrer optischen Achse (22) asymmetrisch ausgebildet ist.

11. Lichtmodul (10) nach einem der vorhergehenden Ansprüche, **dadurch gekennzeichnet, dass** die Sekundäroptik (30) Mittel zur Farbkorrektur aufweist.

12. Lichtmodul (10) nach einem der vorhergehenden Ansprüche, **dadurch gekennzeichnet, dass** die Blende (26) zumindest bereichsweise verspiegelt ist.

13. Beleuchtungseinrichtung für ein Kraftfahrzeug mit mindestens einem Lichtmodul (10) zur Erzeugung einer Lichtverteilung auf einer Fahrbahn vor dem Kraftfahrzeug, **dadurch gekennzeichnet, dass** das Lichtmodul (10) nach einem der Ansprüche 1 bis 12 ausgebildet ist.

## Claims

1. A light module (10) for a motor vehicle lighting device, having at least one semiconductor light source (18) for emitting light, at least one primary lens (20; 20') for focusing the emitted light, a light baffle (26), which extends in a substantially horizontal plane that includes an optical axis (32) of the light module (10), for shading a portion of the focused light, and having a secondary lens (30) for projecting the portion of the light that has moved past the light baffle (26) as well as a portion of the light reflected by the light baffle (26), for generating a desired light distribution having a substantially horizontal light/dark boundary onto the roadway ahead of the motor vehicle, wherein the light module (10) includes a plurality of light/dark boundaries (18) with at least one primary lens (20; 20') associated with them, which primary lens is aimed and embodied such that the optical axis (22) of the at least one primary lens (20; 20') extends in at least one plane which intersects the horizontal plane of the light baffle (26), **characterized in that** the secondary lens (30) is displaceable dynamically as a function of ambient conditions and/or vehicle states along its optical axis, in order to adjust the sharpness and color of the light/dark boundary.

2. The light module (10) of claim 1, **characterized in that** the semiconductor light sources (18) and the primary lenses (20; 20') are aimed and embodied such that the optical axes (22) of the primary lenses (20; 20') extend in a plurality of planes, preferably in two planes, which intersect one another and each intersect the horizontal plane of the light baffle (26).

3. The light module (10) of claim 1 or 2, **characterized in that** the semiconductor light sources (18) of the light module (10) are located on a common heat sink (12).

4. The light module (10) of one of the foregoing claims, **characterized in that** the operation of the semiconductor light sources (18) is effected at a current intensity of below 50% of a maximum possible current intensity.

5. The light module (10) of one of the foregoing claims, **characterized in that** the semiconductor light sources (18) are located above the horizontal plane of the light baffle (26).

6. The light module (10) of claim 4, **characterized in that** at least one further semiconductor light source (38) is located below the horizontal plane of the light baffle (26).

7. The light module (10) of claim 6, **characterized in that** the at least one further semiconductor light source (38) is aimed such that its optical axis (40) intersects the horizontal plane of the light baffle (26).

8. The light module (10) of one of the foregoing claims, **characterized in that** the semiconductor light sources (18) and/or the further semiconductor light sources (38) are triggerable or dimmable individually or in groups.

9. The light module (10) of one of the foregoing claims, **characterized in that** at least one of the primary lenses (20') has a deflecting effect, in addition to the focusing effect.

10. The light module (10) of claim 8, **characterized in that** the at least one primary lens (20') is embodied asymmetrically with respect to its optical axis (22).

11. The light module (10) of one of the foregoing claims, **characterized in that** the secondary lens (30) has means for color correction.

12. The light module (10) of one of the foregoing claims, **characterized in that** the light baffle (26) is mirrored at least in some regions.

13. A motor vehicle lighting device, having at least one light module (10) for generating a light distribution on a roadway ahead of the motor vehicle, **characterized in that** the light module (10) is embodied in accordance with one of claims 1 through 12.

## Revendications

1. Module d'éclairage (10) pour un dispositif d'éclairage d'un véhicule automobile, avec au moins une source lumineuse à semi-conducteur (18) pour émettre de la lumière, au moins une optique primaire (20 ; 20') pour focaliser la lumière émise, un diaphragme (26) qui s'étend dans un plan sensiblement horizontal comportant un axe optique (32) du module d'éclairage (10) pour cacher une partie de la lumière focalisée, et avec une optique secondaire (30) pour former l'image de la partie de lumière passée à côté du diaphragme (26) ainsi que d'une partie de lumière réfléchie par le diaphragme (26), pour produire une répartition de lumière souhaitée avec une limite d'éclairement sensiblement horizontale sur la chaussée devant le véhicule automobile, le module d'éclairage (10) comprenant plusieurs sources lumineuses à semi-conducteur (18) avec au moins une optique primaire (20 ; 20') associée à celles-ci, qui est orientée et formée de façon que l'axe optique (22) de ladite au moins une optique primaire (20 ; 20') s'étende dans au moins un plan qui coupe le plan horizontal du diaphragme (26), **caractérisé en ce que** l'optique secondaire (30) est déplaçable le long de son axe optique en fonction de conditions d'environnement et/ou d'états du véhicule, pour régler la netteté et les couleurs de la limite d'éclairement.

2. Module d'éclairage (10) selon la revendication 1, **caractérisé en ce que** les sources lumineuses à semi-conducteur (18) et les optiques primaires (20 ; 20') sont orientées et formées de façon que les axes optiques (22) des optiques primaires (20 ; 20') s'étendent sur plusieurs, de préférence sur deux, plans qui s'entrecoupent et coupent le plan horizontal du diaphragme (26).

3. Module d'éclairage (10) selon la revendication 1 ou 2, **caractérisé en ce que** les sources lumineuses à semi-conducteur (18) du module d'éclairage (10) sont disposées sur un corps réfrigérant (12) commun.

4. Module d'éclairage (10) selon l'une des revendications précédentes, **caractérisé en ce que** les sources lumineuses à semi-conducteur (18) fonctionnent avec un courant qui est inférieur à 50 % d'un courant maximal possible.

5. Module d'éclairage (10) selon l'une des revendications précédentes, **caractérisé en ce que** les sources lumineuses à semi-conducteur (18) sont disposées au-dessus du plan horizontal du diaphragme (26).

6. Module d'éclairage (10) selon la revendication 4, **caractérisé en ce qu'**au moins une autre source lumineuse à semi-conducteur (38) est disposée en dessous du plan horizontal du diaphragme (26).

7. Module d'éclairage (10) selon la revendication 6, **caractérisé en ce que** ladite au moins une autre source lumineuse à semi-conducteur (38) est orientée de façon que son axe optique (40) coupe le plan horizontal du diaphragme (26).

8. Module d'éclairage (10) selon l'une des revendications précédentes, **caractérisé en ce que** les sources lumineuses à semi-conducteur (18) et/ou les autres sources lumineuses à semi-conducteur (38) sont conçues pour pouvoir être commandées ou régulées individuellement ou par groupes.

9. Module d'éclairage (10) selon l'une des revendications précédentes, **caractérisé en ce qu'**au moins une des optiques primaires (20') produit, outre l'effet de focalisation, aussi un effet de déviation.

10. Module d'éclairage (10) selon la revendication 8, **caractérisé en ce que** ladite au moins une optique primaire (20') est formée de manière asymétrique par rapport à son axe optique (22).

11. Module d'éclairage (10) selon l'une des revendications précédentes, **caractérisé en ce que** l'optique secondaire (30) comprend des moyens de correction de couleurs.

12. Module d'éclairage (10) selon l'une des revendications précédentes, **caractérisé en ce que** le diaphragme (26) est rendu réfléchissant au moins par zones.

13. Dispositif d'éclairage pour un véhicule automobile avec au moins un module d'éclairage (10) pour produire une répartition de lumière sur une chaussée devant le véhicule automobile, **caractérisé en ce que** le module d'éclairage (10) est formé selon l'une des revendications 1 à 12.
